# EUROPEAN PATENT APPLICATION

(11) **EP 4 786 107 A1**
(43) Date of publication of application: **05.08.2026**
(21) Application number: 24872347.0
(22) Date of filing: 26.09.2024
(51) Int. Cl.: B25F 5/00, B25C 1/06, B25C 7/00, H02P 7/28

(54) **WORK MACHINE**

(30) Priority: 29.09.2023 JP 2023168994
(71) Applicant: Koki Holdings Co., Ltd., Tokyo 108-6020 (JP)
(72) Inventor: SUZUKI Shota, Hitachinaka-City Ibaraki 3128502 (JP)
(74) Representative: Parker, Andrew James
(86) International application number: PCT/JP2024/034331
(87) International publication number: WO 2025/070561

(57) **Abstract**

A more convenient working machine is provided. A nail driver 10 includes a motor 22, a control portion 30, a 5-V generator circuit 74, and a switching portion 40. The control portion 30 controls driving of the motor 22. The 5-V generator circuit 74 is capable of performing switch between a supply state and a stop state of power to the control portion 30. The switching portion 40 includes a switch 43, and performs switch between a supply state and a stop state of power to the 5-V generator circuit 74. When the switch 43 is switched to ON state, the switching portion 40 switches the state of the 5-V generator circuit 74 to the supply state. After a first predetermined time has elapsed while the switch 43 is kept in the ON state, the switching portion 40 switches the state of the 5-V generator circuit 74 to the stop state.

## Description

### TECHNICAL FIELD

The present invention relates to a working machine.

### BACKGROUND ART

A working machine described in a Patent Document 1 includes a driving source, a control circuit, and a first operating portion and a second operating portion, positions of which are switchable in response to an operation of an operator. The control circuit makes a first ON determination and a first OFF determination for determining movement of the first operating portion, and a second ON determination and a second OFF determination for determining movement of the second operating portion.

### RELATED ART DOCUMENT

### PATENT DOCUMENT

Patent Document 1: International Patent Publication WO/2021/220703

### SUMMARY OF THE INVENTION

In a working machine for making the ON/OFF determination for the operating portion such as the working machine of the Patent Document 1, if the ON state and the OFF state cannot be switched due to malfunction of the operating portion or the like, the working machine continues to output the ON determination. Thus, even if the operation is to be switched off, the operation is kept in the ON state, and there is a risk of waste power consumption. That is, there is a risk of decrease in convenience of the working machine.

An objective of the present invention is to provide a more convenient working machine.

A working machine according to one embodiment includes: a motor; a control portion controlling driving of the motor; a power supplying portion capable of performing switch between a supply state to supply power to the control portion and a stop state not to supply the power to the control portion; and a switching portion switching an operation state of the power supplying portion to either one of the supply state and the stop state. The switching portion includes a switch switched between an ON state and an OFF state in response to an operation of an operator. When the switch is switched from the OFF state to the ON state while the state of the power supplying portion is the stop state, the switching portion switches the state of the power supplying portion from the stop state to the supply state. Even when the switch is kept in the ON state, the switching portion switches the state of the power supplying portion from the supply state to the stop state after a first predetermined time has elapsed.

### EFFECTS OF THE INVENTION

According to the present invention, convenience of the working machine can be improved.

### BRIEF DESCRIPTIONS OF THE DRAWINGS

[FIG. 1] is a right-side view illustrating an internal configuration of a working machine according to an embodiment of the present invention.
[FIG. 2] is a diagram illustrating a configuration of principal parts of a nail driver of FIG. 1 at a standby position.
[FIG. 3] is a diagram of the principal parts of the nail driver of FIG. 1 at the standby position when viewed from arrow A direction of FIG. 2.
[FIG. 4] is a diagram illustrating a configuration of principal parts of the nail driver of FIG. 1 at a top dead center.
[FIG. 5] is a diagram illustrating a configuration of principal parts of the nail driver of FIG. 1 at a bottom dead center during a normal operation.
[FIG. 6] is a circuit block diagram illustrating a configuration of principal parts of the nail driver of FIG. 1.
[FIG. 7] is a timing chart illustrating changes of items in a case in which a push switch enters ON state after a battery of the nail driver of FIG. 1 is connected.
[FIG. 8] is a timing chart illustrating changes of items in a case in which a control portion determines that the battery of the nail driver of FIG. 1 has been connected.
[FIG. 9] is a timing chart illustrating changes of items in a case in which the control portion determines that the battery of the nail driver of FIG. 1 has not been connected.

### BEST MODE FOR CARRYING OUT THE INVENTION

Hereinafter, embodiments of the present invention will be described in detail with reference to the accompanying drawings. Note that components having the same function are denoted with the same reference symbols throughout all the drawings for describing the embodiments. And, the description of the alreadydescribed configurations and components will be not repeated in principle.

### [Configuration of Nail Driver]

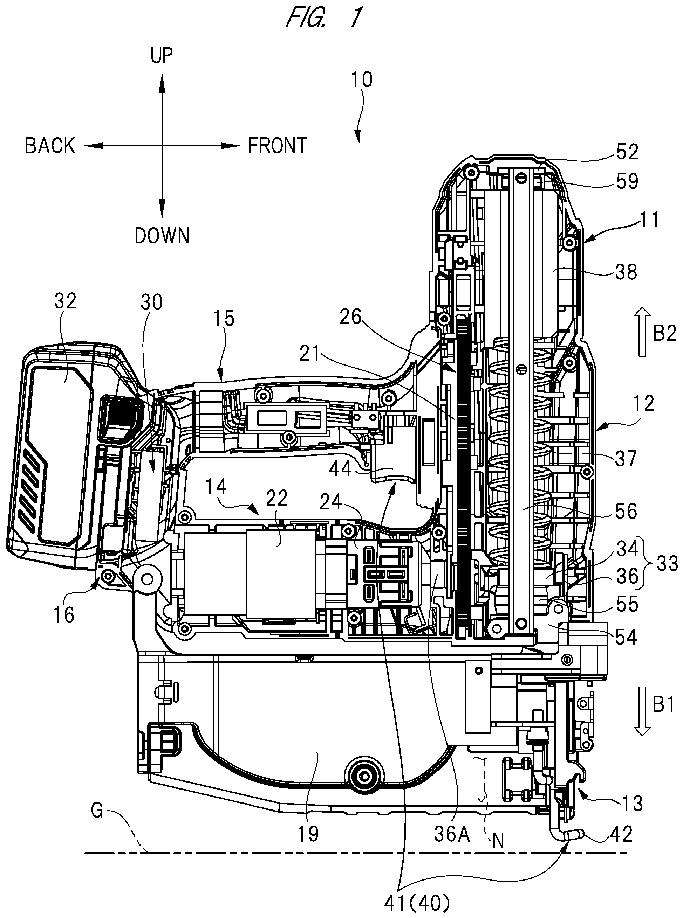

FIG. 1 illustrates a nail driver 10 as an exemplary working machine. Note that the description will be made in assumption that a direction illustrated with arrow B1 in FIG. 1 is a downward direction while a direction illustrated with arrow B2 therein is an upward direction. It is further assumed that directions which are perpendicular to the upward direction and the downward direction and which cross each other are referred to as front-back direction and right-left direction, respectively. The nail driver 10 strikes a nail N as an exemplary fastener, thereby driving the nail into a counterpart material G. The nail driver 10 includes a housing 11 as an exemplary main body of the nail driver 10.

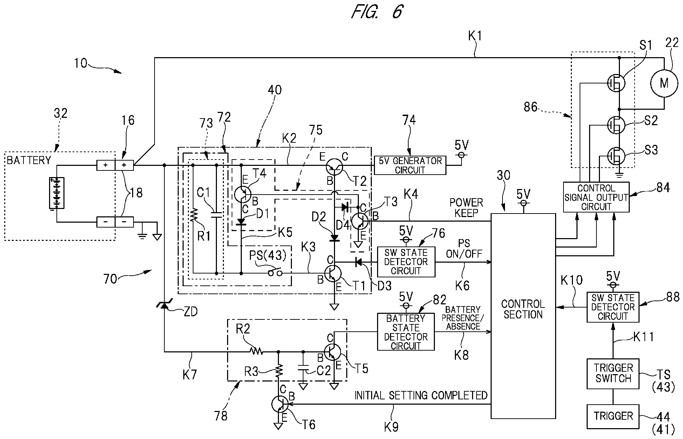

The nail driver 10 (the housing 11) includes a motor 22, a control portion 30, a 5-V generator circuit 74 (FIG. 6), and a switching portion 40. The housing 11 includes a cylinder 12, a motor casing 14, a handle 15, and a mounting portion 16.

The cylinder 12 is formed into a cylindrical shape extending in the up-down direction. The motor casing 14 is cylindrically formed into a cylindrical shape extending backward from the cylinder 12. The handle 15 is formed into a cylindrical shape extending backward from the cylinder 12. The handle 15 is positioned above the motor casing 14. The handle 15 is gripped by an operator.

The mounting portion 16 couples the rear end of the motor casing 14 and the rear end of the handle 15 in the up-down direction. A battery 32 is electrically connected to the mounting portion 16. The battery 32 is provided to be connectable to (mountable on) and detachable from the mounting portion 16.

The cylinder 12 houses a hoist gear 26, a plunger 34, a driver blade 36, a spring 37, a counterweight 38, and the like. An ejecting portion 13 for supporting the nail N so that the nail can be ejected is provided below the cylinder 12. A magazine 19 capable of holding a plurality of nails N is mounted below the motor casing 14. The nails N held by the magazine 19 are fed to the ejecting portion 13 one by one. A push lever 42 is provided below the cylinder 12.

### <Motor>

The motor 22 is housed together with a gear box 24 in the motor casing 14. The motor 22 includes a rotor and a stator not illustrated. When the power is supplied from the battery 32 to the motor 22, the rotor rotates while a motor shaft attached to the rotor rotates. The motor 22 is, for example, a brush motor.

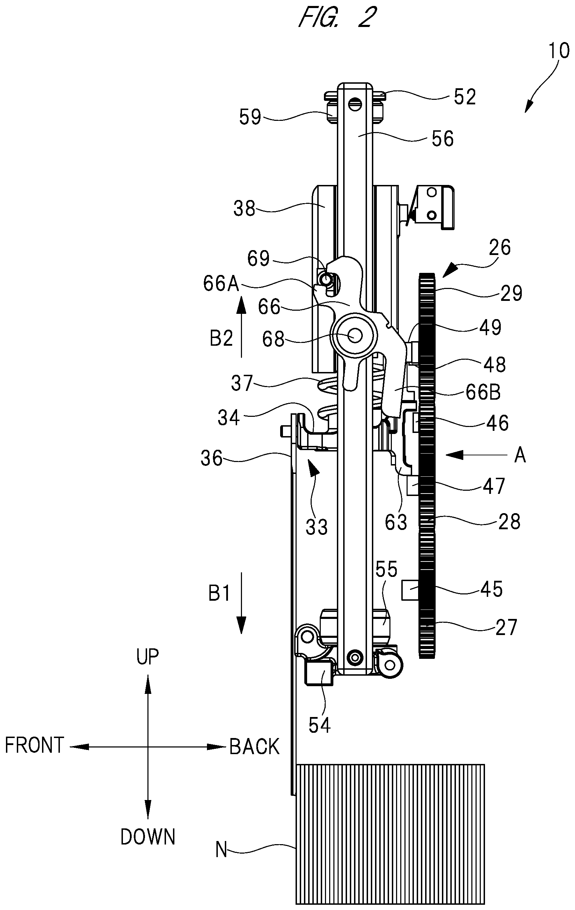

The gear box 24 includes an input element, a planetary gear mechanism, and an output element. The input element is coupled to the motor shaft of the motor 22, and rotates together with the motor shaft of the motor 22. The output element is coupled to a rotation shaft of a first gear 27 (FIG. 2), and rotates together therewith. The first gear 27 configures part of the hoist gear 26.

When a driving force caused by the rotation of the motor shaft is transmitted to the input element, the speed is reduced by the planetary gear mechanism, and the driving force is transmitted to the output element. That is, the driving force caused by the rotation of the motor 22 is transmitted to the first gear 27. The motor 22, the gear box 24, and the first gear 27 are coaxially arranged along the front-back direction.

### <Control Portion>

The control portion 30 can be operated by, for example, power supply of 5 V, and controls driving and stop of the driving of the motor 22. Note that the power of 5 V making the control portion 30 operable is supplied from a 5-V generator circuit 74 (FIG. 6) described later to the control portion 30.

The control portion 30 is provided inside, for example, the mounting portion 16. Specifically, the control portion 30 includes a central processing unit (CPU), a memory, a storage, and a timer, and functions as a computer. The control portion 30 can control the operations of not only the motor 22 but also the respective components in the nail driver 10. Various data including the programs to be executed by the CPU are stored in the memory or the storage. The programs can be loaded in part of the memory.

### <Battery>

The battery 32 is connected to the mounting portion 16. In other words, the battery 32 is an exemplary connective power source portion connectable to the housing 11. The battery 32 supplies the power to the 5-V generator circuit 74 (FIG. 6) and a switching portion 40 described later while being connected to the housing 11. The battery 32 is a direct-current power supply, and includes a plurality of battery cells. The battery cell is, for example, lithium-ion cell, nickel-metal hydride cell, lithium-ion polymer cell, nickel-cadmium cell, and the like.

### <Switching Portion>

The switching portion 40 switches an operation state of the 5-V generator circuit 74 (FIG. 6) described later to either a supply state or a stop state. The switching portion 40 includes at least a switch 43, a shutoff circuit 72, a differentiating circuit 73, a branching circuit 75, and transistors T1, T2.

### <<Operating Portion and Switch>>

The switch 43 is switched between an ON state and an OFF state when an operating portion 41 is operated by the operator. The switch 43 includes, for example, a push switch PS (FIG. 6) and a trigger switch TS (FIG. 6).

The operating portion 41 includes, for example, a push lever 42 and a trigger 44. When the push lever 42 is pressed because of being in contact with the counterpart material G, the push lever 42 enters the ON state. Further, when the trigger 44 is pressed by an operator's finger, the trigger 44 enters the ON state. When the pressing force on the push lever 42 is released, the push lever 42 enters the OFF state. Further, when the pressing force on the trigger 44 is released, the trigger 44 enters the OFF state. Note that the operating portion 41 may include only the push lever 42. When the push lever 42 is in the ON state, the push switch PS (FIG. 6) is in the ON state (conducted). When the push lever 42 is in the OFF state, the push switch PS is in the OFF state (shut off). When the trigger 44 is in the ON state, the trigger switch TS (FIG. 6) is in the ON state. When the trigger 44 is in the OFF state, the trigger switch TS is in the OFF state.

### <<<Push Lever and Push Switch>>>

The push lever 42 is provided away from the handle 15 in the up-down direction. The lower end of the push lever 42 is lower than the ejecting portion 13. The push lever 42 is movable when being in contact with the counterpart material G. When the entire nail driver 10 (the housing 11) is operated to be moved in the up-down direction by the operator, the push lever 42 is in contact with or moves away from the counterpart material G. Thereby, the push lever 42 is switched between the ON state and the OFF state. The phrase "the push lever 42 is in contact with the counterpart material G" means that the lower end of the push lever 42 is in contact with the counterpart material G.

Specifically, when the lower end of the push lever 42 is in contact with the counterpart material G, the push lever 42 is moved upward by a reaction force applied thereon from the counterpart material G, and enters the ON state. When the lower end of the push lever 42 moves away from the counterpart material G, the push lever 42 is moved downward by a biasing force of a spring not illustrated, and enters the OFF state.

The push switch PS illustrated in FIG. 6 is an example of the switch 43. The push switch PS enables a current to flow in a path K3 described later in the ON state, and disables the current to flow in the path K3 in the OFF state. Additionally, the push switch PS has both a switch function to activate the control portion 30 and a switch function to operate the motor 22, but basically operates the motor 22. A SW state detector circuit 76 described later transmits a signal indicating the ON state or the OFF state of the push switch PS to the control portion 30. A SW state detector circuit 88 transmits a signal indicating the ON state or the OFF state of the trigger switch TS to the control portion 30.

### <<<Trigger and Trigger Switch>>>

As illustrated in FIG. 1, the trigger 44 is provided on the handle 15. The trigger 44 is operated by the operator. Specifically, the trigger 44 is moved upward when being pulled by a finger of the operator who is gripping the handle 15. At this time, the trigger switch TS (FIG. 6) enters the ON state. Further, the trigger 44 is provided with a spring not illustrated. The trigger 44 is moved downward by a biasing force of the spring. At this time, the trigger switch TS enters the OFF state. In this way, the push lever 42, the push switch PS (FIG. 6), the trigger 44, and the trigger switch TS are indirectly or directly operated by the operator.

### <<Setting of Switching Portion>>

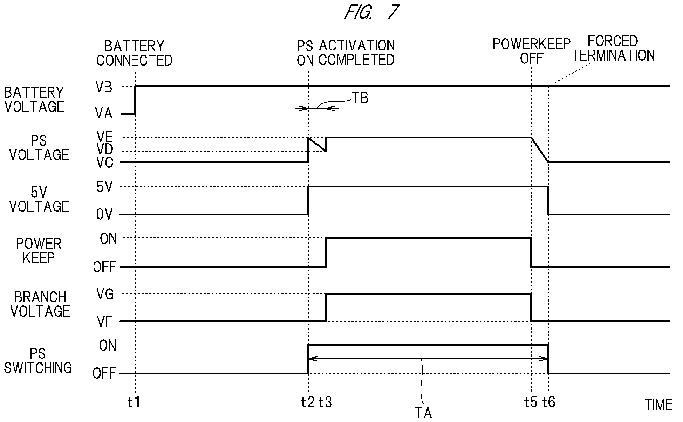

Exemplary setting of the switching portion 40 will be described. When the push lever 42 is switched from the OFF state to the ON state while the 5-V generator circuit 74 (FIG. 6) is in the stop state, the switching portion 40 switches the state of the 5-V generator circuit 74 (FIG. 6) from the stop state to the supply state. In other words, when the push lever 42 itself is switched from the OFF state to the ON state, the push lever 42 switches the state of the 5-V generator circuit 74 from the stop state to the supply state. Even when the push lever 42 is kept in the ON state, the switching portion 40 switches the sate of the 5-V generator circuit 74 from the supply state to the stop state after a first predetermined time TA (FIG. 7) has elapsed.

The "first predetermined time TA" is a threshold time value to determine whether the power is appropriately supplied from the battery 32 while the push lever 42 is in the ON state, and is previously set in the control portion 30. The first predetermined time TA is time elapsed from a time point at which the push lever 42 (the push switch PS (FIG. 6)) is switched to enter the ON state, and is set to, for example, time equal to or longer than 5 minutes and equal to or shorter than 10 minutes.

### <Other Configuration of Nail Driver>

FIG. 2 illustrates an internal configuration of the nail driver 10. The nail driver 10 includes a hoist gear 26, a plunger 34, a driver blade 36, a spring 37, a counterweight 38, and the like which are housed in the cylinder 12 (FIG. 1).

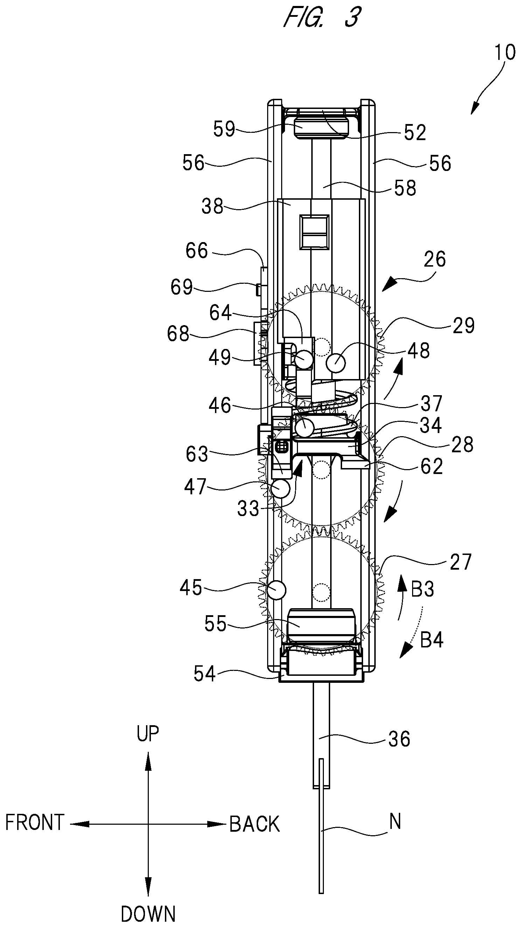

As illustrated in FIG. 3, when the motor 22 (FIG. 1) is driven, the hoist gear 26 rotates in a third direction illustrated with arrow B3. When the motor 22 is stopped, the hoist gear 26 is rotatable in a fourth direction opposite to the third direction. The fourth direction is illustrated with arrow B4.

The hoist gear 26 includes three gears which are the first gear 27 positioned in a lower stage, a second gear 28 positioned in a middle stage, and a third gear 29 positioned in an upper stage. The first gear 27, the second gear 28, and the third gear 29 are rotatably provided on a holding plate 21 (see FIG. 1). The first gear 27 meshes with the second gear 28, and the second gear 28 meshes with the third gear 29.

A front surface of the first gear 27 is provided with a first cam roller 45 eccentrically positioned relative to the rotation shaft of the first gear 27. A front surface of the second gear 28 is provided with a second cam roller 46 and a third cam roller 47 which are eccentrically positioned relative to the rotation shaft of the second gear 28. A front surface of the third gear 29 is provided with a fourth cam roller 48 and a fifth cam roller 49 which are eccentrically positioned relative to the rotation shaft of the third gear 29. Each cam roller can rotate by itself while revolving around each rotation shaft.

As illustrated in FIG. 1, a top holder 52 is fixed to an upper side of the cylinder 12. A bottom holder 54 is fixed to a lower side of the cylinder 12. A guide bar 56 is provided between the top holder 52 and the bottom holder 54. The upper end of the guide bar 56 is fixed to the top holder 52. The lower end of the guide bar 56 is fixed to the bottom holder 54.

As illustrated in FIG. 3, two guide bars 56 are provided apart from each other in the right-left direction. A guide shaft 58 is provided between the two guide bars 56. The upper end of the guide shaft 58 is fixed to the top holder 52. The lower end of the guide shaft 58 is fixed to the bottom holder 54. The plunger 34 and the counterweight 38 are arranged between the two guide bars 56.

The plunger 34 is movable along the guide shaft 58 and the guide bars 56 in the up-down direction. The driver blade 36 is fixed to the plunger 34. The driver blade 36 is movable together with the plunger 34 in the up-down direction. The lower end of the driver blade 36 protrudes downward from the cylinder 12 (FIG. 1), and is enabled to strike the nail N in the ejecting portion 13 (FIG. 1) when moving downward. The plunger 34 and the driver blade 36 configure a striking portion33. The counterweight 38 serves to decrease reaction caused when the striking portion 33 strikes the nail N.

The spring 37 is provided between the plunger 34 and the counterweight 38. The upper end of the spring 37 is fixed to the counterweight 38. The lower end of the spring 37 is fixed to the plunger 34. The spring 37 is, for example, a compression coil spring. The spring 37 biases the plunger 34 downward, and biases the counterweight 38 upward.

A lower bumper 55 is provided between the bottom holder 54 and the plunger 34. An upper bumper 59 is provided between the top holder 52 and the counterweight 38.

The guide shaft 58 passes through the lower bumper 55, the plunger 34, the spring 37, the counterweight 38, and the upper bumper 59. A first rack 62 and a second rack 63 are fixed to the plunger 34.

The first cam roller 45 is engageable with the first rack 62. The second cam roller 46 and the third cam roller 47 are engageable with the second rack 63. The first cam roller 45, the second cam roller 46, and the third cam roller 47 are engageable with the plunger 34 via the first rack 62 or the second rack 63.

A third rack 64 is fixed to the counterweight 38. The fourth cam roller 48 and the fifth cam roller 49 are engageable with the third rack 64. The fourth cam roller 48 and the fifth cam roller 49 rotate while being engaged with the counterweight 38 via the third rack 64, thereby moving the counterweight 38 downward.

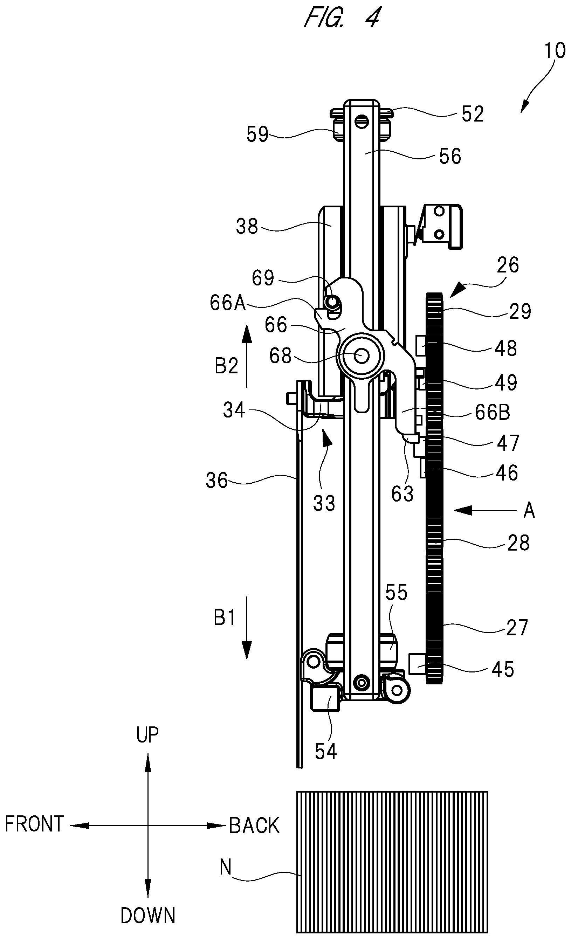

As illustrated in FIG. 4, a latch 66 is attached to a left guide bar 56. The latch 66 is rotatable about a support shaft 68 relative to the guide bar 56. The support shaft 68 is positioned in an arrangement range of the third gear 29 in the up-down direction. The latch 66 is biased clockwise by a torsion coil spring.

The latch 66 includes a hook 66A and an arm 66B. The hook 66A and the arm 66B are arranged apart across the support shaft 68 in a longitudinal direction of the latch 66. The hook 66A can be engaged with and disengaged from an engaging pin 69 provided on the counterweight 38. The arm 66B can be in contact with and separate from the plunger 34. Note that both the counterweight 38 and the striking portion 33 are hoisted by the hoist gear 26, and cooperate in the operation.

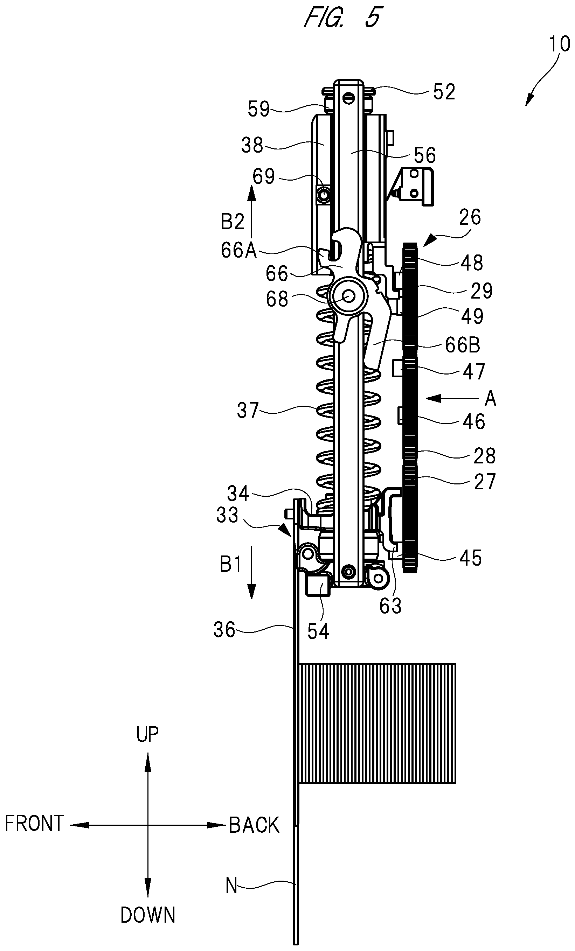

FIG. 2 illustrates a state in which the plunger 34 is at the standby position (first position). FIG. 4 illustrates a state in which the plunger 34 is at the top dead center (second position). FIG. 5 illustrates a state in which the plunger 34 is at the bottom dead center (third position).

As illustrated in FIGs. 2, 4 and 5, the hoist gear 26 rotates while the striking portion 33 is engaged with the hoist gear 26, thereby moving the striking portion 33 from the standby position to the top dead center to be against a biasing force of the spring 37. Further, the striking portion 33 at the top dead center is disengaged from the hoist gear 26 at the top dead center, thereby moving from the top dead center to the bottom dead center by a biasing force of the spring 37 to enable the nail N to be struck.

### <Circuit Block Diagram>

FIG. 6 is a circuit block diagram of the nail driver 10. Note that the components described above are denoted with the same reference symbols, and will not be repeatedly described. The nail driver 10 includes a main body circuit 70. The battery 32 supplies the power to the main body circuit 70 via a connector 18 provided on the mounting portion 16.

### <<Main Body Circuit>>

The main body circuit 70 includes the control portion 30, the shutoff circuit 72, the differentiating circuit 73, the 5-V generator circuit 74, the branching circuit 75, the SW state detector circuits 76, 88, a delay circuit 78, a battery state detector circuit 82, a control signal output circuit 84, and an inverter circuit 86. The main body circuit 70 further includes the push switch PS, the trigger switch TS, resistors R1, R2, R3, capacitors C1, C2, diodes D1, D2, D3, D4, ZD, and transistors T1, T2, T3, T4, T5, T6.

A current path extending from the connector 18 to the inverter circuit 86 is assumed as path K1. A current path extending from the connector 18 to the 5-V generator circuit 74 is assumed as path K2. A current path provided with the push switch PS is assumed as path K3. The path K3 is an exemplary first path. A current flows in the path K3, thereby supplying the power to the 5-V generator circuit 74. A current path extending from the control portion 30 to the transistor T3 is assumed as path K4. A current path connected from the path K2 to the path K3 via the transistor T4 and the diode D1 is assumed as path K5. The path K5 is an exemplary second path. A current path extending from the SW state detector circuit 76 to the control portion 30 is assumed as path K6.

A current path branching from the path K2 and extending to the transistor T5 is assumed as path K7. A current path extending from the battery state detector circuit 82 to the control portion 30 is assumed as path K8. A current path extending from the control portion 30 to the transistor T6 is assumed as path K9. A current path extending from the SW state detector circuit 88 to the control portion 30 is assumed as path K10. A current path extending from the trigger switch TS to the SW state detector circuit 88 is assumed as path K11. Note that a current path other than the path K1 to the path K11 is simply referred to as "current path".

An emitter "E" of the transistor T1 is grounded. A base "B" of the transistor T1 is (electrically) connected to the push switch PS via the path K3. A collector "C" of the transistor T1 is connected to a base "B" of the transistor T2 and the SW state detector circuit 76. The transistor T2 is positioned between the shutoff circuit 72 and the 5-V generator circuit 74 in the path K2. A collector "C" of the transistor T2 is connected to the 5-V generator circuit 74. An emitter "E" of the transistor T2 is connected to the path K2.

A base "B" of the transistor T3 is connected to the control portion 30. An emitter "E" of the transistor T3 is grounded. A collector "C" of the transistor T3 is connected to a base "B" of the transistor T4. An emitter "E" of the transistor T4 is connected to the path K2. A collector "C" of the transistor T4 is connected to the path K3.

A base "B" of the transistor T5 is connected to the path K7. A collector "C" of the transistor T5 is connected to the battery state detector circuit 82. An emitter "E" of the transistor T5 is grounded. A base "B" of the transistor T6 is connected to the control portion 30. An emitter "E" of the transistor T6 is grounded.

The diode D1 is positioned between the transistor T4 and the path K3 (the push switch PS). The diode D2 is positioned between the transistor T1 and the transistor T2. The diode D3 is positioned between the SW state detector circuit 76 and the collector C of the transistor T1. The diode D4 is connected between the transistor T2 and the diode D2 and between the transistor T3 and the transistor T4. The diode ZD is provided in the path K7.

### <<<Shutoff Circuit>>>

The switching portion 40 (FIG. 1) includes the shutoff circuit 72. The shutoff circuit 72 is connected in series to an upstream side of the push switch PS in the path K3, and is configured to shut off a current in the path K3. The shutoff circuit 72 shuts off the current in the path K3 after a second predetermined time TB (FIG. 7) has elapsed from a time point at which the state of the push lever 42 (the push switch PS) switches from the OFF state to the ON state. The shutoff circuit 72 includes the differentiating circuit 73.

The "second predetermined time TB" is shorter than the first predetermined time TA, and is previously set in the control portion 30. The second predetermined time TB is set to, for example, "several seconds".

### <<<Differentiating Circuit>>>

The differentiating circuit 73 is a circuit provided in series to the path K2 and the path K3. The differentiating circuit 73 is made of, for example, the resistor R1 and the capacitor C1 which are connected in parallel. The differentiating circuit 73 can convert the second predetermined time TB elapsed in the shutoff circuit 72 into an instantaneous pulse-waveform time. This is because the charges, the charges in the capacitor C1 are discharged via the resistor R1 even if being accumulated in the capacitor C1.

### <5-V generator Circuit>

The 5-V generator circuit 74 is an exemplary power supplying portion. The 5-V generator circuit 74 generates a direct-current voltage of 5 V from an output voltage of the battery 32, and supplies the power (power supply voltage) equivalent to 5 V to the control portion 30, the SW state detector circuits 76, 88, and the battery state detector circuit 82. Further, the 5-V generator circuit 74 can perform the switch between the supply state to supply the power to the control portion 30 and the stop state not to supply the power to the control portion 30. The 5-V generator circuit 74 enters the supply state when the transistor T2 enters the ON state since the power of the battery 32 is supplied via the path K2 thereto, and enters the stop state when the transistor T2 enters the OFF state since the power of the battery 32 is not supplied via the path K2. The expression "5 V" in FIG. 6 means a voltage generated in the 5-V generator circuit 74.

### <<<Branching Circuit>>>

The switching portion 40 includes the branching circuit 75. The branching circuit 75 can perform the switch between shutoff and non-shutoff of the current in the path K5 electrically connected in parallel to the shutoff circuit 72. The branching circuit 75 includes, for example, the transistors T3, T4 and the diode D1. The branching circuit 75 does not shut off the current in the path K5 when a signal "POWERKEEP" is transmitted from the control portion 30, or shuts off the current in the path K5 when the signal "POWERKEEP" is not transmitted from the control portion 30.

The signal "POWERKEEP" is a signal for indicating whether the control portion 30 instructs the 5-V generator circuit 74 to keep supplying the power supply voltage of 5 V. A state in which the signal POWERKEEP is ON means that the control portion 30 gives an instruction to supply the power supply voltage. A state in which the signal POWERKEEP is OFF means that the control portion 30 gives an instruction to stop supplying the power supply voltage.

### <<<SW State Detector Circuit>>>

The SW state detector circuit 76 detects the ON state of the push switch PS by using change of the voltage in the SW state detector circuit 76 caused by the flow of the current from the collector C to the emitter E in the transistor T1 when the push switch PS is ON (connected) state.

Further, the SW state detector circuit 76 detects the OFF state of the push switch PS since the voltage in the SW state detector circuit 76 does not change because of no flow of the current from the collector C to the emitter E in the transistor T1 when the push switch PS is OFF (not-connected) state. Note that the information on whether the push switch PS is in the ON state or the OFF state, which is detected by the SW state detector circuit 76, is transmitted to the control portion 30.

The SW state detector circuit 88 detects an ON (connected) state or an OFF (not-connected) state of the trigger switch TS described later, based on a current flow in the SW state detector circuit 88. Note that the information on whether the trigger switch TS is in the ON state or the OFF state, which is detected by the SW state detector circuit 88, is transmitted to the control portion 30.

### <<<Delay Circuit>>>

The delay circuit 78 includes, for example, the resistors R2, R3 and the capacitor C2. In the present embodiment, the delay circuit 78 includes the transistor T5. When the battery 32 is connected to the housing 11, the power is supplied to the path K7 via the diode ZD. In this case, the delay circuit 78 delays a time until the power supplied to the path K7 reaches the base B (gate) of the transistor T5. That is, when the battery 32 is connected to the mounting portion 16, the delay circuit 78 delays a timing at which the transistor T5 enters the ON state. The delay circuit 78 is used to discriminate a case in which the battery 32 is connected to the housing 11 after the push switch PS enters the ON state from a case in which the push switch PS enters the ON state after the battery 32 is connected to the housing 11.

### <<<Battery State Detector Circuit>>>

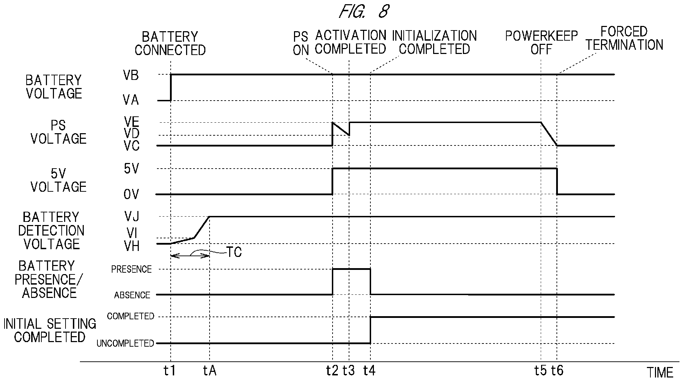

The battery state detector circuit 82 is an exemplary detector circuit for detecting that the battery 32 is present/absent. The battery state detector circuit 82 detects whether the battery 32 is connected to the housing 11 (the mounting portion 16). Specifically, the battery state detector circuit 82 transmits a battery detection signal to the control portion 30 after a third predetermined time TC (FIG. 8), which is shorter than the first predetermined time TA (FIG. 7), has elapsed since the battery state detector circuit 82 detects that the battery 32 is connected to the housing 11. If the transistor T5 is in the ON state while the voltage obtained by the battery state detector circuit 82 is 0 V, the battery state detector circuit 82 determines that the battery 32 is connected to the housing 11, and transmits a battery detection signal ("BATTERY PRESENCE") to the control portion 30.

### <<<Control Signal Output Circuit>>>

The control signal output circuit 84 operates the inverter circuit 86, based on an instruction from the control portion 30.

### <<<Inverter Circuit>>>

The inverter circuit 86 converts the direct current supplied from the battery 32 into alternating current, and supplies the current to the motor 22. Note that the inverter circuit 86 includes, for example, switching elements S1, S2, and S3.

### <<<Trigger Switch>>>

The trigger switch TS enters the ON state when the trigger 44 is gripped (pressed) by the operator. Further, the trigger switch TS enters the OFF state when the pressing force on the trigger 44 in the ON state is released.

### <Processings Performed by Control Portion>

The control portion 30 illustrated in FIG. 6 transmits an ON signal to the switching portion 40 such that the switching portion 40 switches the state of the 5-V generator circuit 74 to the supply state, before the second predetermined time TB (FIG. 7) has elapsed from the start of the power supply from the 5-V generator circuit 74. Specifically, the control portion 30 transmits the signal POWERKEEP to the branching circuit 75 via the path K4 before the the second predetermined time TB has elapsed from the start of the power supply from the 5-V generator circuit 74.

If the ON/OFF state in the switch 43 does not switch before the first predetermined time TA has elapsed after the control portion 30 transmits the ON signal to the switching portion 40, the control portion 30 stops transmitting the ON signal to the switching portion 40. Further, when the initial setting is completed, the control portion 30 flows the current through the base B of the transistor T6 via the path K9.

When the trigger 44 is switched ON while the push lever 42 is already in the ON state, the control portion 30 drives the motor 22. Further, the control portion 30 is designed not to drive the motor 22 even if the push lever 42 is switched ON while the trigger 44 is already in the ON state.

### [Description of Comparative Examples]

A configuration without the differentiating circuit 73 (in other words, a configuration in which the push switch PS is directly connected to the connector 18) will be described as a comparative example of the nail driver 10 according to the present embodiment. Note that the configuration of the comparative example is not illustrated.

When the push switch PS in the configuration without the differentiating circuit 73 is kept in the ON state, the power (current) supplied from the battery 32 keeps flowing to the ground via the push switch PS. In this case, the current is wasted.

Further, the control portion 30 is kept in the activation state while the push switch PS is kept in the ON state. In the comparative example, it is assumed that the control portion 30 performs a shutdown processing of switching the transistor T3 to the OFF state if the control portion 30 remains activated for, for example, 15 minutes. In this case, even when the control portion 30 switches the transistor T3 to the OFF state, if the push switch PS is kept in the ON state, the transistor T2 undesirably enters the ON state due to the current flowing from the push switch PS. Thus, the control portion 30 cannot be shut down. As described above, the configuration of the comparative example wastes the power (current).

### [Functions of Nail Driver]

The functions of the nail driver 10 according to the present embodiment will be described below with reference to FIG. 6. FIGs. 1 to 5 are referred to for the components of the nail driver 10, which are not illustrated in FIG. 6, and the individual numbers of the drawings are omitted. Note that the CPU in the control portion 30 reads out a processing program from the memory, and loads and executes the processing program to part of the memory, and thus, each processing is performed by the nail driver 10.

### <Functions of Differentiating Circuit and Branching Circuit>

This description will be made mainly about the differentiating circuit 73 and the branching circuit 75.

### <<Activation of Control Portion>

When the push switch PS enters the ON state (connected state), the power is supplied from the battery 32 via the differentiating circuit 73, and thus, the transistor T1 enters the ON state instantaneously (during the second predetermined time TB). In other words, the differentiating circuit 73 instantaneously makes the flow of the pulse-waveform current toward the transistor T1.

Since the transistor T1 instantaneously enters the ON state, the transistor T2 instantaneously enters the ON state, and the power of the battery 32 is supplied to the 5-V generator circuit 74 via the path K2. Then, the power (power supply voltage) of 5 V is then supplied from the 5-V generator circuit 74 to the control portion 30. Thereby, the control portion 30 instantaneously enters the ON state (activated state).

The control portion 30 transmits the signal POWERKEEP to the branching circuit 75 (the transistor T3) via the path K4 (instantaneously) before the second predetermined time TB (FIG. 7) has elapsed from the start of the power supply from the 5-V generator circuit 74. Thus, the transistor T3 is in the ON state even if the instantaneously ON-switched transistor T1 enters the OFF state soon, and thus, the transistor T2 can be kept in the ON state. That is, the control portion 30 can remain activated.

In a comparative example configuration not including the branching circuit 75 but only including the differentiating circuit 73, the transistor T1 can be in the ON state only during the second predetermined time TB even if the push switch PS is in the ON state.

To the contrary, the nail driver 10 according to the present embodiment includes not only the differentiating circuit 73 but also the branching circuit 75, and thus, the control portion 30 can remain activated even if the transistor T1 enters the OFF state. Thereby, the supply of the power equivalent to 5 V from the 5-V generator circuit 74 to each component can be kept.

### <<Detection of Long Press of Push Switch>>

The control portion 30 can detect a long-press state of the push switch PS (a state of the ON state continued). Specifically, the transistor T4 is switched to enter the ON state (operation state) by the current flow from the collector C to the emitter E in the transistor T3 when the transistor T3 is in the ON state (operation state), and the power is supplied to the push switch PS.

That is, even if the differentiating circuit 73 can supply the power only instantaneously, when the control portion 30 is in the ON state, the power of the battery 32 is supplied to the push switch PS via the branching circuit 75. In this way, since the nail driver 10 includes the branching circuit 75, the SW state detector circuit 76 can detect the long-press state of the push switch PS.

### <<Nail Striking Operation>>

When the push switch PS is in the ON state while the trigger switch TS is in the ON state, the control portion 30 drives the motor 22 to strike the nail N. However, the nail driver 10 permits the motor 22 to be driven when the trigger 44 enters the ON state after the push lever 42 enters the ON state, but does not permit the motor 22 to be driven when the push lever 42 enters the ON state after the trigger 44 enters the ON state.

To the contrary, when at least one of the push switch PS and the trigger switch TS is in the OFF state, the control portion 30 does not permit the motor 22 to be driven.

The nail driver 10 includes the differentiating circuit 73 immediately before the push switch PS, and thus, even if the push switch PS is long-pressed, the power supply via the path K3 can be shut off instantaneously (the second predetermined time TB) from the start. Thus, the power consumption of the nail driver 10 can be made lower than that in the configuration of the comparative examples described above.

### <<Shutdown of Control Portion>>

In the nail driver 10, when the continuous time during which the push switch PS does not switch from either the ON state or the OFF state is longer than the first predetermined time TA, the control portion 30 stops transmitting the signal POWERKEEP. Thereby, even if the push switch PS is in the ON state, the transistor T3 enters the OFF state while the transistor T4 enters the OFF state, and thus, the transistor T1 enters the OFF state while the transistor T2 enters the OFF state. Further, even if the push switch PS is in the OFF state, the transistor T3 enters the OFF state, and thus, the transistor T2 enters the OFF state. That is, since the branching circuit 75 enters the OFF state, the transistor T2 enters the OFF state, and the 5-V generator circuit 74 enters the stop state. As described above, even if the push switch PS is kept in the ON state, the control portion 30 can switch the 5-V generator circuit 74 from the supply state to the stop state. Thereby, the control portion 30 can be shut down, and thus, the power consumption can be further made lower than that of the comparative example in which the control portion keeps operating.

### <Functions of Delay Circuit>

When the battery 32 is connected to the housing 11, the power is supplied from the battery 32 to the path K7 via the diode ZD. The delay circuit 78 delays a time taken until the power supplied to the path K7 reaches the base B of the transistor T5.

### <<Case where Battery is connected before Push switch is switched ON>>

When the battery 32 is connected to the housing 11 while the push switch PS is in the OFF state, the power from the battery 32 reaches the transistor T5 via the delay circuit 78, thereby slowly switching ON the transistor T5. At this time, the battery state detector circuit 82 has not detected the battery 32 yet.

When the push switch PS enters the ON state, the transistors T1 and T2 instantaneously enter the ON state because of the functions of the differentiating circuit 73. Then, the control portion 30 is activated. At the time of the activation of the control portion 30, the transistor T5 is in the ON state while the battery state detector circuit 82 detects the battery 32, and thus, the control portion 30 determines that the battery 32 is connected to the housing 11. Thereby, the control portion 30 permits the motor 22 to be driven. That is, the motor 22 can start to be driven.

### <<Case where Push switch is switched ON before Battery is connected>>

It is assumed that the push switch PS is pressed by the operator and then enters the ON state. When the battery 32 is connected to the housing 11 in this state, the power from the battery 32 is supplied to the push switch PS and the delay circuit 78 almost at the same time. At this time, in terms of the delay circuit 78, the delay circuit 78 slowly enters the ON state, and thus, the transistor T5 does not immediately enter the ON state.

To the contrary, in terms of the shutoff circuit 72, the push switch PS instantaneously enters the ON state via the differentiating circuit 73 while the transistors T1 and T2 enter the ON state, and thus, the control portion 30 is activated. In this way, the control portion 30 is activated before the transistor T5 enters the ON state.

Since the transistor T5 does not enter the ON state at the time of the activation of the control portion 30, the battery state detector circuit 82 transmits a signal "BATTERY ABSENCE" to the control portion 30. That is, at the time of the activation, the control portion 30 determines that the battery 32 is not connected to the housing 11, and does not permit the motor 22 to be driven. Thus, even if the push switch PS and the trigger switch TS are in the ON state at this time, the motor 22 is kept in the stop state.

### <Functions at time of completion of initial setting>

At the time of completion of determining whether the battery 32 is present/absent after the activation, the control portion 30 transmits a signal "INITIAL SETTING COMPLETED" to the base B of the transistor T6. Thereby, the transistor T6 operates, and the charges accumulated in the capacitor C2 are discharged.

In a comparative example configuration in which the charges are accumulated in the capacitor C2 every time the battery 32 is inserted in or pulled out (disconnected or connected), the delay circuit 78 may not operate, and the battery state detector circuit 82 may not correctly function. That is, the presence/absence of the battery 32 may not be correctly detected.

To the contrary, in the nail driver 10 according to the present embodiment, the control portion 30 operates the transistor T6 at the time of the completion of the initial setting, thereby discharging the charges from the capacitor C2. Thus, the transistor T5 can be normally operated, and the battery state detector circuit 82 can be correctly operated, and thus, the control portion 30 can correctly detect the presence/absence of the battery 32.

### <Charts in case of pushing Push switch after connection of Battery>

FIG. 7 illustrates a timing chart showing temporal changes of the items from time t1 to time t6 in the long-pressed case of the push switch PS after the connection of the battery 32 in the nail driver 10 (FIG. 1) according to the present embodiment. The time t1 to time t6 are lined in numerical order, but the time intervals are not constant. Note that a time point from time t2 to time t6 corresponds to the first predetermined time TA. A time point from time t2 to time t3 corresponds to the second predetermined time TB. Note that FIGs. 1 to 6 are referred to for the components of the nail driver 10, and the individual numbers of the drawings are omitted.

FIG. 7 illustrates the exemplary items that are "BATTERY VOLTAGE", "PS VOLTAGE", "5V VOLTAGE", "POWERKEEP", "BRANCH VOLTAGE", and "PS SWITCHING".

The item "BATTERY VOLTAGE" means a voltage of the connector 18. The item "PS VOLTAGE" means a voltage between the push switch PS and the transistor T1 in the path K3. The item "5V VOLTAGE" means a voltage generated by the 5-V generator circuit 74. The item "POWERKEEP" means ON or OFF of the signal POWERKEEP transmitted from the control portion 30.

The item "BRANCH VOLTAGE" means a voltage of the base B of the transistor T4. The item "PS SWITCHING" means switching of a voltage to be input into the base B of the transistor T1. In other words, the item "PS SWITCHING" means the ON state/OFF state of the push switch PS. Note that the voltages VA, VB, VC, VD, VE, VF, and VG illustrated in FIG. 7 are used only for discriminating the voltages, and the arrangement order of the voltages does not relate to the magnitudes of the voltages.

In the item "BATTERY VOLTAGE", the voltage is voltage VA until time t1, and the voltage increases from voltage VA to voltage VB after time t1 at which the battery 32 is connected.

In the item "PS VOLTAGE", the voltage is voltage VC until time t2, and the voltage increases from voltage VC to voltage VE when the push switch PS is switched ON. In the item "PS VOLTAGE", the voltage decreases from voltage VE to voltage VD (> VC) from time t2 to time t3, but increases to voltage VE again after time t3. In the item "PS VOLTAGE", the voltage starts decreasing from voltage VE at time t5 at which the signal POWERKEEP is switched OFF, and reaches voltage VC at time t6.

In the item "5V VOLTAGE", the voltage is 0 V until time t2, and increases from 0 V to 5 V when the push switch PS is switched ON. Then, the voltage starts decreasing from 5 V at time t5 at which the signal POWERKEEP is switched OFF, and reaches 0 V at time t6.

In the item "POWERKEEP", the signal is OFF until time t3, and is ON from time t3 to time t5. Then, the signal POWERKEEP is OFF at time t5.

In the item "BRANCH VOLTAGE", the voltage is voltage VF until time t3, and increases to voltage VG at time t3. In the item "BRANCH VOLTAGE", the voltage is kept to be voltage VG from time t3 to time t5, but decreases to voltage VF after time t5.

In the item "PS SWITCHING", the switch state changes from the OFF state to the ON state at time t2, changes to the OFF state at time t6 at which the first predetermine time TA has elapsed from time t2. After that, the switch state is in the OFF state. In the item "PS SWITCHING", the switch state changes to the OFF state at time t6 since the control portion 30 switches OFF the signal POWERKEEP at time t5. Thus, it can be also said that time t6 is a forced termination point performed by the control portion 30.

FIG. 8 is a timing chart illustrating temporal changes of the items from time t1 to time t6 in the case of the continuous pressing of the push switch PS after the connection of the battery 32. The drawing illustrates the items that are "BATTERY VOLTAGE", "PS VOLTAGE", "5V VOLTAGE", "BATTERY DETECTION VOLTAGE", "BATTERY PRESENCE/ABSENCE", and "INITIAL SETTING COMPLETED". A time point after time t1 and before time t2 is assumed as time tA. A time point from time t1 to time tA corresponds to the third predetermined time TC. Note that the items "BATTERY VOLTAGE", "PS VOLTAGE", "5V VOLTAGE" are similar to those in FIG. 7, and will not be described.

The item "BATTERY DETECTION VOLTAGE" means a voltage to be input into the base B of the transistor T5. The item "BATTERY PRESENCE/ABSENCE" means the presence/absence of the battery 32 such that the information transmitted from the battery state detector circuit 82 to the control portion 30 indicates "PRESENCE" when the battery 32 is connected to the housing 11 or "ABSENCE" when the battery 32 is not connected to the housing 11. The item "INITIAL SETTING COMPLETED" means a state of preparation for driving the motor 22 such that "COMPLETED" is indicated when the control portion 30 determines that the motor 22 can be driven or "UNCOMPLETED" is indicated when the control portion 30 determines that the motor 22 cannot be driven.

In the item "BATTERY DETECTION VOLTAGE", the voltage is voltage VH until time t1, and increases from voltage VH to voltage VI and then to voltage VJ until time tA after time t1 at which the battery 32 is connected. During the connection of the battery 32, the voltage is kept to be voltage VJ even after time t6.

In the item "BATTERY PRESENCE/ABSENCE", the battery is absent until time t2, the battery is present from time t2 to time t4, and the battery is absent after time t4.

In the item "INITIAL SETTING COMPLETED", the state is an "uncompleted" state meaning that the initial setting is uncompleted until time t4, and the state is a "completed" state meaning that the initial setting is completed after time t4.

### <Charts in case of connection of Battery after pushing Push switch>

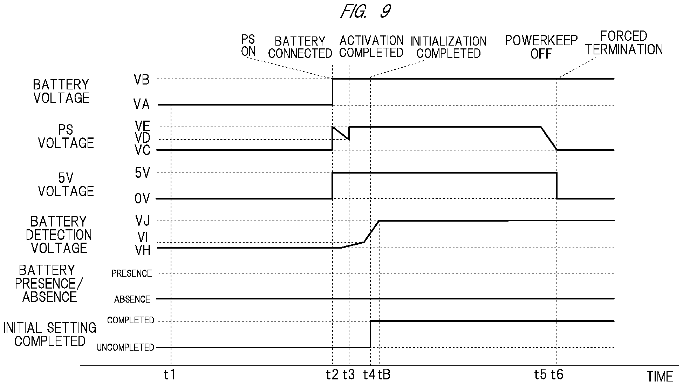

FIG. 9 illustrates a timing chart showing temporal changes of the items from time t1 to time t6 in the connected case of battery 32 to the housing 11 after the pushing of the push switch PS. FIG. 9 illustrates the items that are "BATTERY VOLTAGE", "PS VOLTAGE", "5V VOLTAGE", "BATTERY DETECTION VOLTAGE", "BATTERY PRESENCE/ABSENCE", and "INITIAL SETTING COMPLETED". A time point after time t4 before time t5 corresponds to time tB. Note that the items "PS VOLTAGE" and "5V VOLTAGE" are similar to those in FIG. 7, and will not be described.

In the item "BATTERY VOLTAGE", the voltage is voltage VA until time t2, and increases from voltage VA to voltage VB after time t1 at which the battery 32 is connected.

In the item "BATTERY DETECTION VOLTAGE", the voltage is voltage VH until time t2, and increases from voltage VH to voltage VI and then to voltage VJ until time tB after time t2 at which the battery 32 is connected. During the connection of the battery 32, the voltage is kept to be voltage VJ even after time t6. The time tB is after time t4, and thus, the initial setting in the control portion 30 is completed before the battery detection voltage reaches voltage VJ.

In the item "BATTERY PRESENCE/ABSENCE", the absence of the battery 32 has been already determined before time t2, and thus, the battery is absent all over the time point including time t1 to time t6.

In the item "INITIAL SETTING COMPLETED", the state is the "uncompleted" state meaning that the initial setting is uncompleted until time t4, and the state is the "completed" state meaning that the initial setting is completed after time t4. In this way, before time t2, the initial setting is completed while it is determined that the battery 32 is absent. Thus, the control portion 30 does not permit the motor 22 to be driven after that even if the operator switches ON the trigger switch TS.

Note that FIGs. 7, 8 and 9 illustrate exemplary temporal changes of the respective items. That is, the temporal changes of the respective items are not limited to the changing trends illustrated in FIGs. 7, 8 and 9.

### <Summary of Functions of Present Embodiment>

The functions of the nail driver 10 will be summarized below with reference to FIGs. 1 to 9. For the components of the nail driver 10, the individual numbers of the drawings are omitted.

The control portion 30 of the nail driver 10 controls the driving of the motor 22 in the supply state in which the power is supplied from the 5-V generator circuit 74. When the switch 43 is switched from the OFF state to the ON state in the stop state in which the power is not supplied from the 5-V generator circuit 74, the switching portion 40 switches the sate of the 5-V generator circuit 74 from the stop state to the supply state. In other words, when switching from the OFF state to the ON state, the push lever 42 switches the sate of the 5-V generator circuit 74 from the stop state to the supply state.

Even when the switch 43 is kept in the ON state, the switching portion 40 switches the state of the 5-V generator circuit 74 from the supply state to the stop state after the first predetermined time TA has elapsed. Thereby, the power consumption in the 5-V generator circuit 74 can be reduced. In other words, the convenience of the nail driver 10 can be improved.

In the nail driver 10, the shutoff circuit 72 of the switching portion 40 shuts off the current in the path K3 after the second predetermined time TB has elapsed from the switching of the switch 43 from the OFF state to the ON state. Thereby, even when the switch 43 is kept in the ON state, if the path K3 is shut off, the state of the 5-V generator circuit 74 can be switched to the stop state, and thus, the power consumption of the 5-V generator circuit 74 can be further reduced.

In the nail driver 10, the second predetermined time TB elapsed in the shutoff circuit 72 can be designed to the more instantaneous pulse-waveform time, and thus, the second predetermined time TB can be made shorter. Further, the possibility that the control portion 30 cannot perform normal control operations due to malfunction or the like can be made lower than that in the configuration in which the processings performed in the shutoff circuit 72 are controlled by the control portion 30.

In the nail driver 10, the control portion 30 transmits the ON signal to the switching portion 40 before the second predetermined time TB has elapsed from the start of the power supply. Thereby, even if the current is shut off by the shutoff circuit 72, the switching portion 40 switches the state of the 5-V generator circuit 74 to the supply state, and thus, the power supply to the control portion 30 can be kept.

In the nail driver 10, when the signal POWERKEEP (ON signal) is not transmitted from the control portion 30, the branching circuit 75 shuts off the current in the path K5. At this time, the differentiating circuit 73 does not make the current flow, either. Thereby, the current does not flow in the path K3 even when the push switch PS (the switch 43) is in the ON state.

To the contrary, when the signal POWERKEEP is transmitted from the control portion 30, the branching circuit 75 does not shut off the current in the path K5. That is, even when the current is shut off by the shutoff circuit 72, if the switch 43 is in the ON state, the current flows in the path K3. Thereby, when the current is shut off by the shutoff circuit 72 since the switch 43 is kept in the ON state for a long time, the control portion 30 can be suppressed from erroneously determining that the switch 43 enters the OFF state in the middle.

In the nail driver 10, if such an abnormal state that the ON state/OFF state of the switch 43 does not switch occurs, the control portion 30 stops transmitting the ON signal to the switching portion 40, and thus, the control portion 30 can be prevented from uselessly continuously transmitting the ON signal to the switching portion 40.

It is conceivable that the nail driver 10 is configured to include both the push lever 42 and the trigger 44 such that the motor 22 is driven when the trigger 44 is switched ON after the push lever 42 is switched ON and such that the motor 22 is not driven in reverse order. In the configuration, the 5-V generator circuit 74 enters the supply state when the push lever 42 is switched ON, and thus, the control portion 30 can be immediately activated for the operations of driving the motor 22, and the operations can be smoothly performed. To the contrary, if the trigger 44 is switched ON first, the motor 22 is basically not driven, and thus, it is unnecessary to activate the control portion 30 when the trigger 44 is switched ON. Thus, some functions required for the switching portion 40 are removed from the trigger 44, thereby simplifying the circuits in the nail driver 10.

In the nail driver 10, the battery state detector circuit 82 transmits the detection signal to the control portion 30 after the third predetermined time TC has elapsed from the time point when the connection of the battery 32 to the housing 11 is detected. It is assumed herein that the battery 32 is disconnected from the housing 11 immediately after the battery 32 is connected to the housing 11 while the battery state detector circuit 82 detects the connection of the battery 32 (before the third predetermined time TC has elapsed). In this case, the battery state detector circuit 82 can detect that the battery 32 is not connected to the housing 11, and thus, erroneous detection of the battery state detector circuit 82 can be suppressed.

### [Modification Examples]

It is needless to say that the present invention is not limited to the foregoing embodiments, and various modifications can be made within the scope of the present invention. Modification examples of the present embodiment will be described below.

The nail driver 10 may not include the shutoff circuit 72. Further, the shutoff circuit 72 may be any circuit other than the differentiating circuit 73 if being capable of transmitting the pulse-waveform signal to the transistor T1. The control portion 30 may not transmit the ON signal to the switching portion 40 before the second predetermined time TB has elapsed from the start of the power supply.

The switching portion 40 may not include the branching circuit 75. The control portion 30 may switch the state of the 5-V generator circuit 74 from the supply state to the stop state without stopping the transmission of the ON signal to the switching portion 40. The trigger switch TS and the push switch PS may be replaced with each other. A switching portion which includes the trigger switch TS instead of the push switch PS may be provided separately from the switching portion 40. The battery state detector circuit 82 may be removed, and the control portion 30 may determine whether the battery 32 is present/absent.

An alternating-current adapter may be used instead of the battery 32. For example, the AC adapter is connected to an alternating-current power supply outside the nail driver 10, converts an alternating-current power into a direct-current power (of, for example, 12 V), and supplies the direct-current power to the terminal of the connector 18 of the nail driver 10.

The power supplying portion is not limited to the 5-V generator circuit 74. Any circuit for generating a voltage other than 5 V may be provided.

The working machine is not limited to the nail driver 10, and may be a machine which is operated by rotation of another motor. Another example of the working machine may be a drill used for drilling work.

The first predetermined time TA may be set not to be equal to or longer than 5 minutes and equal to or shorter 10 minutes. Another condition instead of the first predetermined time TA may be set as the condition that the switching portion 40 (the control portion 30) switches the state of the 5-V generator circuit 74 from the supply state to the stop state even when the push lever 42 is kept in the ON state. For example, the switching portion 40 (the control portion 30) may switch the state of the 5-V generator circuit 74 from the supply state to the stop state when the drop amount of the output voltage of the battery 32 is larger than a predetermined threshold while the push lever 42 is kept in the ON state or when the voltage value of the output voltage of the battery 32 is smaller than a predetermined threshold while the push lever 42 is in the ON state.

10 ... nail driver, 11 ... housing, 12 ... cylinder, 13 ... ejecting portion, 14 ... motor casing, 15 ... handle, 16 ... mounting portion, 18 ... connector, 19 ... magazine, 21 ... holding plate, 22 ... motor, 24 ... gear box, 26 ... hoist gear, 27 ... first gear, 28 ... second gear, 29 ... third gear, 30 ... control portion, 32 ... battery, 33 ... striking portion, 34 ... plunger, 36 ... driver blade, 37 ... spring, 38 ... counterweight, 40 ... switching portion, 41 ... operating portion, 42 ... push lever, 43 ... switch, 44 ... trigger, 45 ... first cam roller, 46 ... second cam roller, 47 ... third cam roller, 48 ... fourth cam roller, 49 ... fifth cam roller, 52 ... top holder, 54 ... bottom holder, 55 ... lower bumper, 56 ... guide bar, 58 ... guide shaft, 59 ... upper bumper, 62 ... first rack, 63 ... second rack, 64 ... third rack, 66 ... latch, 66A ... hook, 66B ... arm, 68 ... support shaft, 69 ... engaging pin, 70 ... main body circuit portion, 72 ... shutoff circuit, 73 ... differentiating circuit, 74 ... 5-V generator circuit, 75 ... branching circuit, 76 ... SW state detector circuit, 78 ... delay circuit, 82 ... battery state detector circuit, 84 ... control signal output circuit, 86 ... inverter circuit, 88 ... SW state detector circuit, B ... base, C ... collector, C1 ... capacitor, C2 ... capacitor, D1 ... diode, D2 ... diode, D3 ... diode, D4 ... diode, E ... emitter, G ... counterpart material, K1 ... path, K2 ... path, K3 ... path, K4 ... path, K5 ... path, K6 ... path, K7 ... path, K8 ... path, K9 ... path, K10 ... path, K11 ... path, N ... nail, PS ... push switch, R1 ... resistor, R2 ... resistor, R3 ... resistor, S1 ... switching element, S2 ... switching element, S3 ... switching element, T1 ... transistor, T2 ... transistor, T3 ... transistor, T4 ... transistor, T5 ... transistor, T6 ... transistor, t1 ... time, t2 ... time, t3 ... time, t4 ... time, t5 ... time, t6 ... time, tA ... time, tB ... time, TA ... first predetermined time, TB ... second predetermined time, TC ... third predetermined time, TS ... trigger switch, VA ... voltage, VB ... voltage, VC ... voltage, VD ... voltage, VE ... voltage, VF ... voltage, VG ... voltage, VH ... voltage, VI ... voltage, VJ ... voltage, ZD ... diode

## Claims

1. A working machine comprising:
a motor;
a control portion controlling driving of the motor;
a power supplying portion capable of performing switch between a supply state to supply power to the control portion and a stop state not to supply the power to the control portion; and
a switching portion switching an operation state of the power supplying portion to either one of the supply state and the stop state,
wherein the switching portion includes a switch switched between an ON state and an OFF state in response to an operation of an operator,
when the switch is switched from the OFF state to the ON state while a state of the power supplying portion is the stop state, the switching portion switches the state of the power supplying portion from the stop state to the supply state, and
even when the switch is kept in the ON state, the switching portion switches the state of the power supplying portion from the supply state to the stop state after a first predetermined time has elapsed.

2. The working machine according to claim 1, comprising:
a first path capable of supplying the power to the power supplying portion by a current flow,
wherein the switch enables the current to flow in the first path when being in the ON state, and disables the current to flow in the first path when being in the OFF state,
the switching portion includes a shutoff circuit being connected in series to an upstream side of the switch in the first path and being capable of shutting off the current flow in the first path, and
the shutoff circuit shuts off the current flow in the first path after a second predetermined time, which is shorter than the first predetermined time, has elapsed from the switching of the switch from the OFF state to the ON state.

3. The working machine according to claim 2,
wherein the shutoff circuit includes a differentiating circuit.

4. The working machine according to claim 2,
wherein the control portion transmits an ON signal to the switching portion such that the switching portion switches the state of the power supplying portion to the supply state, before the second predetermined time has elapsed from start of the power supply from the power supplying portion.

5. The working machine according to claim 4,
wherein the switching portion includes a branching circuit capable of performing switch between shutoff and non-shutoff of a current flow in a second path electrically connected in parallel to the shutoff circuit, and
the branching circuit does not shut off the current flow in the second path when the ON signal is transmitted from the control portion, and shuts off the current flow in the second path when the ON signal is not transmitted from the control portion.

6. The working machine according to claim 4,
wherein the control portion stops transmitting the ON signal to the switching portion when the switch is not switched between the ON state and the OFF state before the first predetermined time has elapsed from the transmission of the ON signal to the control portion.

7. The working machine according to any one of claims 1 to 6, comprising:
a trigger provided on a handle gripped by an operator; and
a push lever provided away from the handle and being movable when being in contact with a counterpart material,
wherein the control portion drives the motor when the trigger is switched ON while the push lever is already switched ON, and does not drive the motor when the push lever is switched ON while the trigger is already switched ON, and
the switch enters the ON state when the push lever is switched ON.

8. The working machine according to claim 1, comprising:
a main body including the motor, the control portion, the power supplying portion, and the switching portion;
a connective power source portion being connectable to the main body and supplying power to the power supplying portion and the switching portion while being connected to the main body; and
a detector circuit detecting that the connective power source portion is connected to the main body,
wherein the detector circuit transmits a detection signal to the control portion when a third predetermined time, which is shorter than the first predetermined time, has elapsed since it is detected that the connective power source portion is connected to the main body.

9. A working machine comprising:
a motor;
a control portion controlling driving of the motor;
a power supplying portion capable of performing switch between a supply state to supply power to the control portion and a stop state not to supply the power to the control portion; and
a switch switched between an ON state and an OFF state in response to an operation of an operator,
wherein the switch switches a state of the power supplying portion from the stop state to the supply state when being switched from the OFF state to the ON state, and
the control portion is capable of switching the state of the power supplying portion from the supply state to the stop state even when the switch is kept in the ON state.
